# FASCICULE DE BREVET EUROPEEN

(11) **EP 4 396 528 B1**
(45) Date de publication et mention de la délivrance du brevet: **06.08.2025**
(21) Numéro de dépôt: 22765903.4
(22) Date de dépôt: 19.08.2022
(51) Int. Cl.: G01B 21/04, G01N 29/04, G01N 29/06, G01N 29/22, G01N 29/24, G01N 29/265, G01B 11/02

(54) **PROCÉDÉ ET OUTIL DE CALIBRATION DE SYSTÈME DE POSITIONNEMENT PASSIF**
VERFAHREN UND WERKZEUG ZUR KALIBRIERUNG EINES PASSIVEN POSITIONIERUNGSSYSTEMS
METHOD AND TOOL FOR CALIBRATING A PASSIVE POSITIONING SYSTEM

(30) Priorité: 31.08.2021 FR 2109075
(43) Date de publication de la demande: 10.07.2024
(73) Titulaire: Commissariat à l'Energie Atomique et aux Energies Alternatives, 75015 Paris (FR)
(72) Inventeur: CARDOSO, Michel, 91191 GIF-SUR-YVETTE CEDEX (FR); GRASSIN, Florence, 91191 GIF-SUR-YVETTE CEDEX (FR); SAINT MARTIN, Vincent, 91191 GIF-SUR-YVETTE CEDEX (FR)
(74) Mandataire: Atout PI Laplace
(86) Numéro de dépôt international: PCT/EP2022/073207
(87) Numéro de publication internationale: WO 2023/030923

(56) Documents cités:
- FR-A1- 3 087 254
- FR-A1- 3 105 423

## Description

La présente invention se situe dans le domaine des mesures et de la calibration des capteurs de mesure. L'invention peut s'appliquer à tout type de capteurs.

L'invention est ici présentée, à titre d'illustration et de manière non limitative, dans le domaine du contrôle non destructif avec un capteur à ultrasons. Sur la base de la description de l'invention, il apparaîtra clairement à un Homme du métier que le principe de l'invention peut s'appliquer à d'autres types de capteurs pour en calibrer leur positionnement.

Le contrôle non destructif par ultrasons est une méthode non-invasive de détection de défauts dans une pièce, basée sur l'émission d'ultrasons et la détection de leur réflexion liée aux interfaces acoustiques rencontrées.

Un capteur adapté émet des ultrasons à une fréquence (généralement entre 500 kHz et 100 MHz) choisie en fonction de la nature de la pièce à contrôler. Le capteur doit être en contact direct avec la pièce pour que les ondes propagées ne soient pas freinées par l'impédance de l'air entre le point d'émission du capteur et la pièce.

Les ondes se réfléchissent sur les interfaces acoustiques rencontrées : contours de la pièce, défauts intérieurs.

Le capteur, placé au contact de la pièce à contrôler, intercepte les ondes réémises par un défaut éventuel.

Les ondes détectées sont converties en signaux par un ensemble électronique associé du capteur. Un logiciel assemble ces signaux pour former une image de l'intérieur de la pièce. L'analyse des images permet de discriminer les échos dus à un défaut de ceux liés à la géométrie de la pièce.

Afin de positionner et orienter précisément dans l'espace un point particulier d'un capteur (par exemple un point d'émission du signal), il est nécessaire de déterminer la matrice de transformation (translation et rotation) entre le porte-capteur (repéré par un dispositif de positionnement) et le point particulier du capteur. Une matrice de transformation est une matrice qui permet, à partir des coordonnées d'un point initial, de trouver celles de son image par une transformation géométrique donnée. Autrement dit, en connaissant les coordonnées du porte-capteur, la matrice de transformation permet de déterminer les coordonnées du point d'émission du signal.

Dans le domaine du contrôle non destructif, un opérateur balaie le capteur sur toute une zone d'examen préalablement définie de la pièce à contrôler. Il est impératif que toute la zone soit balayée par le capteur. L'ensemble des coordonnées du point d'émission du signal est un élément capital qui permet de vérifier que toute la zone a bien été balayée.

Tous les capteurs sont différents les uns des autres dans leur géométrie. Il est donc nécessaire de concevoir un support de capteur (aussi appelé porte-capteur) adapté pour chaque nouveau capteur. Ainsi, la matrice de transformation entre le porte-capteur et le capteur est à chaque fois différente et unique. Il est difficile d'obtenir cette matrice de transformation de manière rapide, simple et précise.

Le document FR 3 087 254 B1 propose un procédé de configuration d'un dispositif de contrôle non destructif d'une pièce mécanique permettant de déterminer la position et l'orientation de la surface active du capteur dans le repère lié à la zone d'examen de la pièce mécanique à contrôler. Ce procédé comporte une étape d'apprentissage de l'origine et des axes de la surface active dans le repère associé à un premier corps rigide lié fixement au capteur. Cette étape doit être renouvelée pour chaque ensemble différent de capteur et de premier corps rigide, et également pour tout nouveau porte-capteur.

L'invention vise à pallier tout ou partie des problèmes cités plus haut en proposant un procédé et dispositif de calibration qui permet de déterminer de façon simple et rapide la matrice de transformation entre un porte-capteur et le capteur, tout en garantissant de minimiser les erreurs liées à la manipulation.

A cet effet, l'invention a pour objet un procédé de calibration d'un dispositif de contrôle non destructif d'une pièce mécanique, le dispositif comprenant :
- un système optique de suivi de mouvement auquel un repère de référence est lié,
- un porte-capteur,
- un premier corps rigide,
- un capteur de contrôle non destructif solidaire du porte-capteur relié de manière fixe au premier corps rigide,
- un calculateur,
le procédé étant caractérisé en ce qu'il comprend les étapes suivantes :
- Détermination, à partir de trois points sur une surface plane supérieure d'un bloc de calibration, de la longueur et la largeur du bloc de calibration ;
- détermination d'une première matrice de transformation du repère de référence vers un repère du bloc lié au bloc de calibration ;
- disposition du capteur sur la surface plane supérieure du bloc de calibration ;
- détermination, à partir de trois points sur le premier corps rigide, de la longueur et la largeur du capteur ;
- détermination d'une deuxième matrice de transformation permettant de passer d'un repère lié au porte-capteur à un repère lié au capteur.

Avantageusement, le procédé de calibration selon l'invention comprend en outre une étape de détermination d'une troisième matrice de transformation permettant de passer du repère de référence au repère lié au capteur.

Avantageusement, le procédé de calibration selon l'invention comprend, préalablement à l'étape de détermination de la première matrice de transformation du repère de référence vers un repère du bloc lié au bloc de calibration, une étape de détermination du repère du bloc lié au bloc de calibration dans le repère de référence.

Avantageusement, le procédé de calibration selon l'invention comprend, préalablement à l'étape de détermination de la deuxième matrice de transformation permettant de passer d'un repère lié au porte-capteur à un repère lié au capteur, une étape de détermination du repère lié au capteur dans le repère lié au porte-capteur.

Avantageusement, le procédé de calibration selon l'invention comprend, préalablement à l'étape de détermination du repère lié au capteur dans le repère lié au porte-capteur, une étape de détermination d'une quatrième matrice de transformation permettant de passer du repère lié au porte-capteur au repère de référence.

L'invention concerne aussi un dispositif de contrôle non destructif d'une pièce mécanique, comprenant :
- un système optique de suivi de mouvement auquel un repère de référence est lié,
- un porte-capteur,
- un premier corps rigide,
- un capteur de contrôle non destructif solidaire du porte-capteur relié de manière fixe au premier corps rigide,
- un calculateur,
le dispositif de contrôle non destructif étant caractérisé en ce qu'il comprend un bloc de calibration et en ce que le calculateur est configuré pour
- déterminer, à partir de trois points sur une surface plane supérieure du bloc de calibration, la longueur et la largeur du bloc de calibration ;
- déterminer une première matrice de transformation du repère de référence vers un repère du bloc lié au bloc de calibration ;
- déterminer, à partir de trois points sur le premier corps rigide, la longueur et la largeur du capteur lorsqu'il est disposé sur la surface plane supérieure du bloc de calibration ;
- déterminer une deuxième matrice de transformation permettant de passer d'un repère lié au porte-capteur à un repère lié au capteur.

Avantageusement, le calculateur est en outre configuré pour déterminer une troisième matrice de transformation permettant de passer du repère de référence au repère lié au capteur.

Avantageusement, le dispositif de contrôle selon l'invention comprend en outre un dispositif de pointage comportant une pointe et relié de manière fixe à un second corps rigide, le dispositif de pointage étant apte à déterminer la position de points sur une surface.

L'invention concerne aussi un programme d'ordinateur comportant des instructions qui conduisent le dispositif selon l'invention à exécuter les étapes du procédé de calibration selon l'invention.

L'invention concerne aussi un support d'enregistrement lisible par un ordinateur sur lequel est enregistré ledit programme d'ordinateur.

L'invention porte aussi sur un procédé de visualisation en temps réel d'un signal de contrôle non destructif d'une pièce mécanique, le signal étant émis par un dispositif de contrôle non destructif comprenant :
- un système optique de suivi de mouvement auquel un repère de référence est lié,
- un porte-capteur,
- un premier corps rigide,
- un capteur de contrôle non destructif solidaire du porte-capteur relié de manière fixe au premier corps rigide,
- un calculateur,
- **un dispositif** de visualisation en réalité augmentée en vis-à-vis de la pièce mécanique, auquel un repère de réalité augmentée est lié,
le procédé de visualisation comprenant les étapes du procédé de calibration et les étapes suivantes :
- Déplacement du capteur de contrôle non destructif sur une zone d'examen de la pièce mécanique ;
- Simultanément à l'étape de déplacement du capteur de contrôle non destructif, émission à partir d'un point d'émission selon un axe d'émission et réception du signal par le capteur ;
- Détermination d'une occlusion à l'intérieur de la pièce mécanique, l'occlusion étant centrée autour du point d'émission ;
- Détermination d'une surface d'intersection d'un plan contenant l'axe d'émission dans l'occlusion ;
- Visualisation, sur le dispositif de visualisation en réalité augmentée,
   ∘ d'une vue réelle de la pièce mécanique, du porte-capteur et du capteur de contrôle non destructif,
   ∘ d'une représentation 3D holographique de la pièce mécanique, du porte-capteur et du capteur de contrôle non destructif, superposées à la vue réelle,
   ∘ d'une représentation 3D holographique de l'occlusion et de la surface d'intersection, superposées à la vue réelle.

L'invention sera mieux comprise et d'autres avantages apparaîtront à la lecture de la description détaillée d'un mode de réalisation donné à titre d'exemple, description illustrée par le dessin joint dans lequel :
la [Fig.1] représente schématiquement un dispositif de contrôle non destructif selon un mode de réalisation de l'invention ;
la [Fig.2] représente schématiquement un capteur associé à un porte-capteur d'un dispositif de contrôle non destructif selon un mode de réalisation de l'invention ;
la [Fig.3] représente schématiquement un dispositif de pointage selon un mode de réalisation de l'invention ;
la [Fig.4] représente schématiquement une pièce mécanique susceptible d'être contrôlée par le dispositif de contrôle non destructif de l'invention ;
la [Fig.5] représente schématiquement un organigramme des étapes d'un procédé de calibration selon l'invention ;
la [Fig.6] représente schématiquement une transformation (composée d'une translation et/ou d'une rotation) permettant de passer d'un repère R_{A} à un repère R_{B} ;
la [Fig.7] représente schématiquement la surface supérieure d'un bloc de calibration mis en œuvre dans le procédé de calibration selon l'invention ;
la [Fig.8] représente schématiquement le capteur, porte-capteur et premier corps rigide du dispositif de calibration selon l'invention ;
la [Fig.9] représente schématiquement la surface supérieure d'un bloc de calibration mis en œuvre dans le procédé de calibration selon l'invention pour déterminer la longueur et largeur du capteur ;
la [Fig.10] représente schématiquement un organigramme des étapes du procédé de visualisation en temps réel d'un signal de contrôle non destructif d'une pièce mécanique selon l'invention ;
la [Fig.11] illustre l'affichage obtenu dans le dispositif de visualisation en réalité augmentée avec le procédé de visualisation selon l'invention ;
la [Fig.12] représente schématiquement le QR code mis en œuvre dans l'étape de calibration du dispositif de visualisation en réalité augmentée dans le repère de référence du procédé de visualisation selon l'invention ;
la [Fig.13] représente schématiquement les matrices de transformation dans le procédé de visualisation selon l'invention ;
la [Fig.14] représente schématiquement les matrices de transformation dans le procédé de visualisation selon l'invention.

Par souci de clarté, les mêmes éléments porteront les mêmes repères dans les différentes figures. Pour une meilleure visibilité et dans un souci de compréhension accrue, les éléments ne sont pas toujours représentés à l'échelle.

L'objet de l'invention réside dans le fait de déterminer de manière simple et rapide la matrice de transformation entre le porte-capteur et le capteur, afin de calibrer le dispositif de contrôle non destructif (en faisant le lien mathématique entre le dispositif de suivi de mouvement et le point d'émission du capteur).

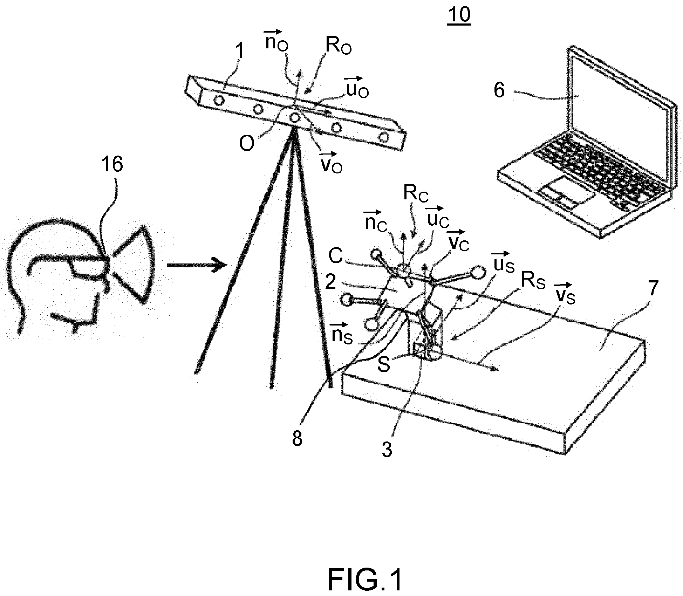

La figure 1 représente schématiquement un dispositif 10 de contrôle non destructif selon un mode de réalisation de l'invention. Le dispositif 10 de contrôle non destructif d'une pièce mécanique comprend un système optique de suivi de mouvement 1 qui a pour fonction de suivre le mouvement d'un objet dans l'espace et plus particulièrement le mouvement de corps rigides tels que décrits dans la suite.

Le système optique de suivi de mouvement 1 est associé à un repère orthonormé R₀= (0, *̅u̅*̅₀̅, *̅v̅*̅₀̅*,* *̅n̅*̅₀̅) où O est l'origine du repère et *̅u̅*̅₀̅, *̅v̅*̅₀̅*,* *̅n̅*̅₀̅ sont des vecteurs normés orthogonaux entre eux.

Le système optique de suivi de mouvement 1 détermine les coordonnées cartésiennes et l'orientation d'un corps rigide dans le repère orthonormé du système optique de suivi de mouvement 1.

Le système optique de suivi de mouvement 1 comporte au moins deux caméras et un ou plusieurs émetteurs infrarouges. D'autres types de système optique sont utilisables dans le cadre de l'invention, par exemple un système optique à base de laser et/ou avec des marqueurs non volumiques de type pastille. Il est important de préciser que le système 1 peut être un système de suivi de mouvement passif (optique ou non optique).

Le dispositif 10 de contrôle non destructif comprend un premier corps rigide 2 relié à une sonde, ou capteur, 3 et un porte-capteur 8. Le capteur 3 est solidaire du porte-capteur 8 relié de manière fixe au premier corps rigide 2. Le premier corps rigide 2, le porte-capteur 8 et le capteur 3 sont reliés de manière fixe et forment un ensemble indivisible lors du contrôle non destructif. Le premier corps rigide 2 comporte au moins trois cibles sphériques réfléchissantes aux infrarouges situées à des positions distinctes. Le premier corps rigide 2 est associé à un repère orthonormé R_{C}= (C, *u̅_̅{̅c̅}̅, v̅_̅{̅c̅}̅,* *̅n̅*̅_̅{̅c̅}̅) où C est l'origine du repère et *u̅_̅{̅c̅}̅, v̅_̅{̅c̅}̅, n̅_̅{̅c̅}̅* sont des vecteurs normés orthogonaux entre eux.

Dans un mode de réalisation préféré, le premier corps rigide 2 comporte six cibles sphériques. Le capteur 3 est par exemple une sonde ultra-son mono-élément. Il comporte une surface émettrice et réceptrice, dite surface active, 31. La surface active 31 est un rectangle de surface plane. En variante, le capteur 3 est d'un autre type, par exemple une sonde à courant de Foucault. De manière générale, une surface active est toute surface émettrice ou réceptrice de signaux physiques appartenant à un capteur de contrôle non destructif. Par exemple, dans le cas d'un capteur ultrasonore mono élément au contact, cela correspond à la surface du piézoélectrique. Dans le cas d'un capteur ultrasonore mono élément avec un sabot en « Plexiglas », cela correspond à la surface du sabot au travers de laquelle sont émis les signaux ultrasons.

Le dispositif 10 de contrôle comprend un bloc de calibration et un calculateur 6. En outre, le calculateur est configuré pour réaliser les étapes suivantes qui seront explicitées ci-dessous :
- déterminer, à partir de trois points sur une surface plane supérieure du bloc de calibration, la longueur et la largeur du bloc de calibration ;
- déterminer une première matrice de transformation du repère de référence (R₀) vers un repère du bloc (R_{B}) lié au bloc de calibration ;
- déterminer, à partir de trois points sur le premier corps rigide (2), la longueur et la largeur du capteur lorsqu'il est disposé sur la surface plane supérieure du bloc de calibration ;
- déterminer une deuxième matrice de transformation permettant de passer d'un repère (R_{H}) lié au porte-capteur à un repère (R_{S}) lié au capteur.

Le calculateur est en outre configuré pour déterminer une troisième matrice de transformation permettant de passer du repère de référence (R₀) au repère (R_{S}) lié au capteur.

L'invention est décrite pour le suivi d'un capteur, mais elle s'applique également au suivi de plusieurs capteurs, simultanément et de manière indépendante.

Le dispositif de contrôle non destructif comprend un calculateur 6 relié au système optique de suivi de mouvement 1 et à un module de commande 5. Le calculateur 6 est par exemple un ordinateur ou une carte électronique. Il comporte notamment un processeur exécutant un programme d'ordinateur mettant en œuvre le procédé qui va être décrit et une mémoire pour en mémoriser les résultats. Il comporte aussi des interfaces d'entrée et de sortie et peut être associé à un écran de visualisation.

La liaison entre le calculateur 6 et le système optique de suivi de mouvement 1 peut être filaire ou sans fil. De même, la liaison entre le calculateur 6 et le module de commande 5 peut être filaire ou sans fil.

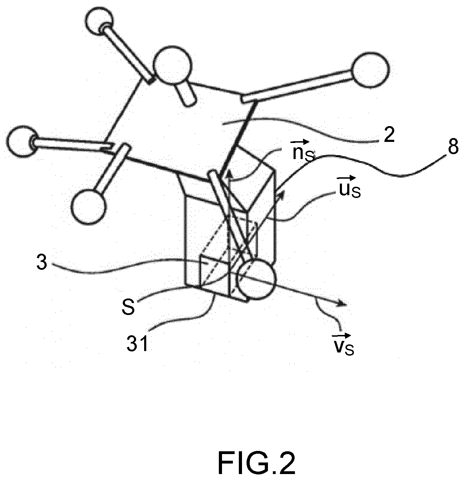

La figure 2 représente schématiquement un capteur 3 associé à un porte-capteur 8 d'un dispositif 10 de contrôle non destructif selon un mode de réalisation de l'invention. Le capteur de contrôle non destructif 3 est solidaire du porte-capteur 8 relié de manière fixe au premier corps rigide 2. Plus précisément, le capteur est inséré dans un porte-capteur, lequel est solidaire d'un corps rigide permettant de le localiser dans le repère du système de positionnement optique. La surface inférieure du capteur s'étend sensiblement dans le même plan que la surface inférieure du porte-capteur.

Avantageusement, le dispositif de contrôle non destructif comprend un dispositif de pointage 4.

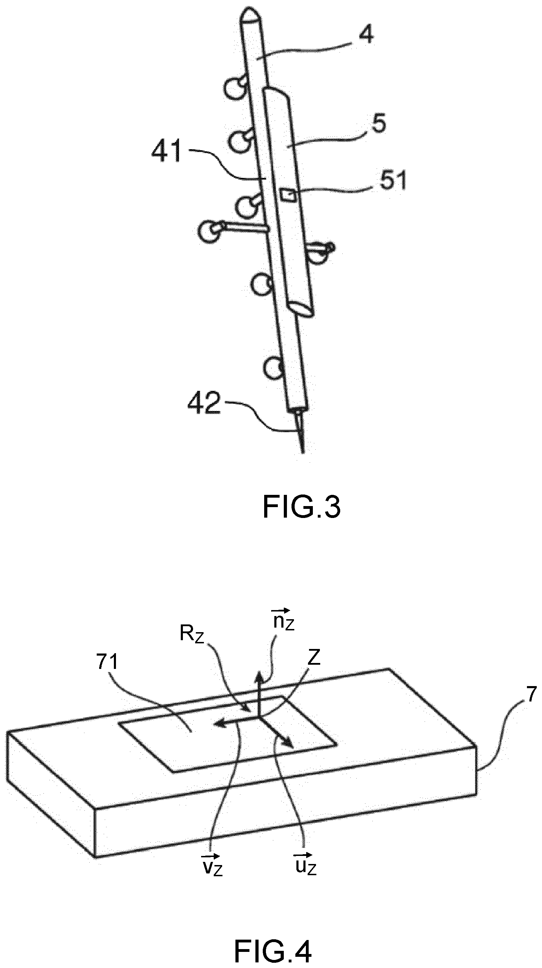

La figure 3 représente schématiquement un dispositif de pointage 4 selon un mode de réalisation de l'invention. Le dispositif de pointage 4 comporte un second corps rigide 41 et une pointe de précision 42. Le second corps rigide 41 comporte au moins trois cibles sphériques réfléchissantes aux infrarouges situées à des positions distinctes. La forme du second corps rigide 41, c'est-à-dire le positionnement exact des sphères les unes par rapport aux autres, est connu à l'avance. Le second corps rigide 41 et la pointe de précision 42 sont reliés de manière fixe et forment un ensemble indivisible. L'origine du second corps rigide 41 a été préalablement configurée pour correspondre à la pointe 42. Ainsi, l'origine du second corps rigide 41 qui sera mesurée par le système optique de suivi de mouvement 1 comme exposé dans la suite correspond exactement au point physique pointé avec le dispositif de pointage.

Dans un mode de réalisation préféré, le second corps rigide 41 comporte sept cibles sphériques.

Le dispositif de contrôle non destructif comporte un module de commande 5 muni d'au moins un bouton d'actionnement 51. De préférence le module de commande 5 est monté sur le dispositif de pointage 4 pour en faciliter l'utilisation.

La figure 4 représente schématiquement une pièce mécanique 7 susceptible d'être contrôlée par le dispositif de contrôle non destructif de l'invention. La pièce mécanique à contrôler 7 comporte une zone d'examen 71 définie sur la surface de la pièce mécanique 7. La zone d'examen 71 s'étend sur tout ou partie de la pièce mécanique. La zone d'examen est sur une partie de la pièce mécanique qui a une surface de forme géométrique connue, telle qu'une surface plane, une surface cylindrique ou encore une surface conique, par exemple. Dans tous les cas, la forme géométrique de la zone d'examen peut être représentée par une fonction analytique. Alternativement, il est aussi possible de travailler à partir d'un maillage de la pièce issu par exemple d'un logiciel de CAO (abréviation de conception assistée par ordinateur).

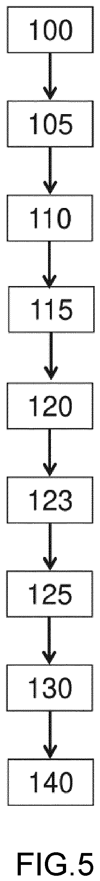

La figure 5 représente schématiquement un organigramme des étapes d'un procédé de calibration selon l'invention. Dans ce qui suit, nous utiliserons les lettres suivantes :
- R pour qualifier un repère
- C pour qualifier le centre (ou origine) d'un repère
- I, J et K pour qualifier les vecteurs unitaires d'un repère respectivement suivant les axes x, y et z de ce même repère
- P ou Q pour qualifier un point
- V pour qualifier un vecteur
- T pour qualifier une matrice de transformation
- L pour qualifier une longueur
- W pour qualifier une largeur
- O pour qualifier le système de positionnement optique et le repère monde associé
- B pour qualifier le bloc de calibration et le repère bloc associé
- H pour qualifier le porte-capteur et le repère porte-capteur associé
- S pour qualifier le capteur et le repère capteur associé

Pour exprimer un vecteur V̅₁̅ dans le repère R_{A} , la notation ^̅{̅A̅}̅V̅₁̅ est utilisée. A noter qu'un vecteur sert aussi bien à exprimer une position qu'un déplacement.

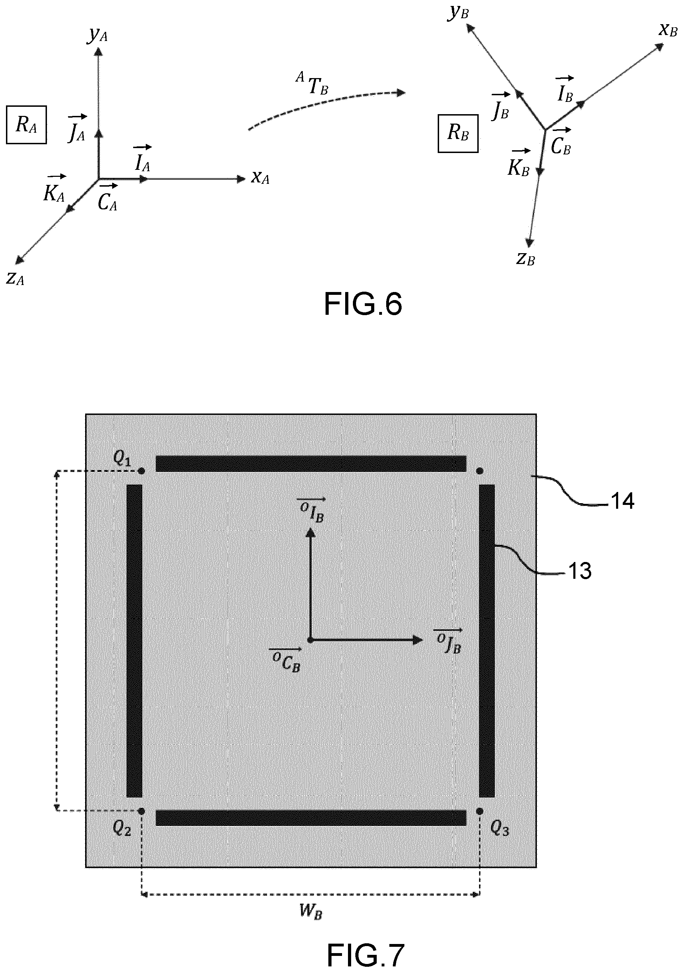

La transformation (composée d'une translation et/ou d'une rotation) permettant de passer d'un repère R_{A} à un repère R_{B} est définie par la matrice de transformation A_{T_{B}}. La figure 6 représente schématiquement une telle transformation.

Cette matrice de transformation de dimensions 4×4 se compose comme suit :
$T B A = \left[\begin{matrix}\vec{I B A} & \vec{J B A} & \vec{K B A} & \vec{C B A} \\ 0 & 0 & 0 & 1\end{matrix}\right] = \left[\begin{matrix}I {x}_{B} A & J {x}_{B} A & K {x}_{B} A & C {x}_{B} A \\ I {y}_{B} A & J {y}_{B} A & K {y}_{B} A & C {y}_{B} A \\ I {z}_{B} A & J {z}_{B} A & K {z}_{B} A & C {z}_{B} A \\ 0 & 0 & 0 & 1\end{matrix}\right]$

*^̅{̅A̅}̅I̅_̅{̅B̅}̅, ^̅{̅A̅}̅J̅_̅{̅B̅}̅* et *̅^̅{̅A̅}̅K̅_̅{̅B̅}̅*̅ désignent respectivement les vecteurs unitaires suivant les axes *x_{B}, y_{B}* et *z_{B}* du repère *R_{B}* et exprimés dans le repère *R_{A}*.

*̅^̅{̅A̅}̅C̅_̅{̅B̅}̅*̅ est le vecteur exprimant l'origine du repère *R_{B}* dans le repère *R_{A}*.

Le système de suivi de mouvement 1 est capable de repérer dans l'espace des corps rigides 2, 41. Un corps rigide est une collection non déformable de marqueurs sphériques reflétant les rayons infrarouges et ainsi repérables par le système de positionnement optique. Après calibration, le système de suivi de mouvement peut associer à un corps rigide un repère origine qui sert à qualifier la position et l'orientation de corps rigides dans le repère du système de suivi de mouvement.

Il faut noter qu'afin d'être correctement repérés, les corps rigides doivent se situer dans l'angle solide vu par le système de suivi de mouvement.

Notamment, le système de suivi de mouvement est fourni avec un outil calibré en usine permettant d'obtenir les coordonnées d'un point de l'espace dans le repère dudit système de suivi de mouvement. Dans la suite, cet outil est dénommé second corps rigide 41.

Deux corps rigides différents sont utilisés dans le procédé de calibration de l'invention : le second corps rigide 41 précédemment décrit et le premier corps rigide 2 servant à repérer le porte-capteur 8. C'est ce dernier premier corps rigide 2 qui fait l'objet de la procédure de calibration décrite dans la présente invention. Le but de ce procédé de calibration est de pouvoir déterminer rapidement, simplement et avec précision la transformation géométrique (rotation et/ou translation) existant entre l'origine du premier corps rigide 2 telle que repérée par le système de suivi de mouvement et le point d'émission des ultrasons par le capteur 3, indépendamment du porte-capteur utilisé. En d'autres termes, le procédé de calibration de l'invention permet de déterminer la transformation géométrique, sous forme de matrice de transformation, entre l'origine du premier corps rigide 2 et un point du capteur quelle que soit la forme du porte-capteur nécessairement disposé entre ces deux éléments.

Le dispositif 10 de contrôle selon l'invention comprend
- un système optique de suivi de mouvement 1 auquel un repère de référence (R0) est lié,
- un porte-capteur 8,
- un premier corps rigide 2,
- un capteur de contrôle non destructif 3 solidaire du porte-capteur 8 relié de manière fixe au premier corps rigide 2

Le procédé de calibration d'un dispositif de contrôle non destructif d'une pièce mécanique 7 comprend les étapes suivantes :
- détermination (100), à partir de trois points sur une surface plane supérieure d'un bloc de calibration 14, de la longueur et la largeur du bloc de calibration ;
- détermination (110) d'une première matrice de transformation du repère de référence (R₀) vers un repère du bloc (R_{S}) lié au bloc de calibration ;
- disposition (115) du capteur 3 sur la surface plane supérieure du bloc de calibration 14 ;
- détermination (120), à partir de trois points sur le premier corps rigide (2), de la longueur et la largeur du capteur 3 ;
- détermination (130) d'une deuxième matrice de transformation permettant de passer d'un repère (R_{H}) lié au porte-capteur à un repère (R_{S}) lié au capteur.

Avantageusement, le procédé de calibration selon l'invention comprend en outre une étape 140 de détermination d'une troisième matrice de transformation permettant de passer du repère de référence (R₀) au repère (R_{S}) lié au capteur. La troisième matrice de transformation est obtenue par multiplication de la deuxième matrice de transformation avec la première matrice de transformation.

Le but des étapes 100 et 110 est de calibrer le bloc de calibration 14 lui-même, c'est-à-dire de déterminer ses dimensions (longueur et largeur) et de lui associer un repère R_{B} lié au bloc de calibration. Le système de suivi de mouvement et le bloc de calibration doivent être fermement fixés afin d'éviter toute modification de leurs positions et orientations relatives. Alors, un opérateur utilise le système de suivi de mouvement et le second corps rigide 41 afin d'acquérir trois positions à la surface du bloc de calibration 14. Ces trois positions *Q*₁*, Q*₂ et *Q*₃ sont préalablement marquées, avantageusement mais pas obligatoirement par de petits trous créés à cet effet à la surface supérieure plane du bloc de calibration 14, comme indiqué sur la figure 7. Avantageusement, ces trois positions sont situées à trois sommets d'un rectangle délimité par les bloqueurs 13.

La figure 7 représente schématiquement la surface supérieure d'un bloc de calibration mis en œuvre dans le procédé de calibration selon l'invention. Le bloc de calibration est une pièce présentant une surface supérieure plane sur laquelle une zone a été délimitée par des bloqueurs 13. Les dimensions de cette zone, de forme rectangulaire, sont connues précisément. Comme cela apparaitra clairement par la suite, les bloqueurs 13 servent de butée pour bien positionner l'ensemble capteur et porte-capteur au niveau d'un sommet, préférentiellement angle droit, de la zone.

Le procédé de calibration selon l'invention peut comprendre, préalablement à l'étape 110 de détermination de la première matrice de transformation du repère de référence R₀ vers un repère du bloc R_{B} lié au bloc de calibration, une étape 105 de détermination du repère du bloc R_{B} lié au bloc de calibration dans le repère de référence R₀.

Plus précisément, le calculateur 6 reçoit en entrée trois vecteurs :
- Vecteur définissant la première position dans le repère de référence *R_{O}* : *̅^̅{̅O̅}̅Q̅*̅₁̅
- Vecteur définissant la deuxième position dans le repère de référence *R_{O}* : *̅^̅{̅O̅}̅Q̅*̅₂̅
- Vecteur définissant la troisième position dans le repère de référence *R_{O}* : *̅^̅{̅O̅}̅Q̅*̅₃̅

Le calculateur 6 calcule les données suivantes :
- Longueur du bloc : *L_{B}*
- Largeur du *bloc : W_{B}*
- Matrice de transformation permettant de passer du repère de référence *R_{O}* au repère bloc *R_{B}* : *^{O}T_{B}*

Les étapes de calcul sont détaillées ci-après.

Le vecteur définissant le centre du bloc de calibration dans le repère de référence *R_{O}* est calculé : $\vec{C B O} = \frac{\vec{Q 1 O} + \vec{Q 3 O}}{2}$

Le vecteur définissant la longueur du bloc de calibration dans le repère monde *R_{O}* est calculé : $\vec{L B O} = \vec{Q 1 O} - \vec{Q 2 O}$

Le vecteur définissant la largeur du bloc de calibration dans le repère monde *R_{O}* est calculé : $\vec{W B O} = \vec{Q 3 O} - \vec{Q 2 O}$

La longueur du bloc de calibration peut ainsi être calculée : ${L}_{B} = \left‖\vec{L B O}\right‖$

La largeur du bloc de calibration peut également être calculée : ${W}_{B} = \left‖\vec{W B O}\right‖$

A partir de ces données, il est possible de calculer les trois vecteurs unitaires du repère bloc *R_{B}* dans le repère de référence *R_{O}* :
$\vec{I B O} = \frac{\vec{L B O}}{{L}_{B}}$
$\vec{J B O} = \frac{\vec{W B O}}{{W}_{B}}$
$\vec{K B O} = \vec{I B O} ∧ \vec{J B O}$

Enfin, la matrice de transformation permettant de passer du repère de référence *R_{O}* au repère bloc *R_{B}* est calculée : $T B O = \left[\begin{matrix}\vec{I B O} & \vec{J B O} & \vec{K B O} & \vec{C B O} \\ 0 & 0 & 0 & 1\end{matrix}\right]$

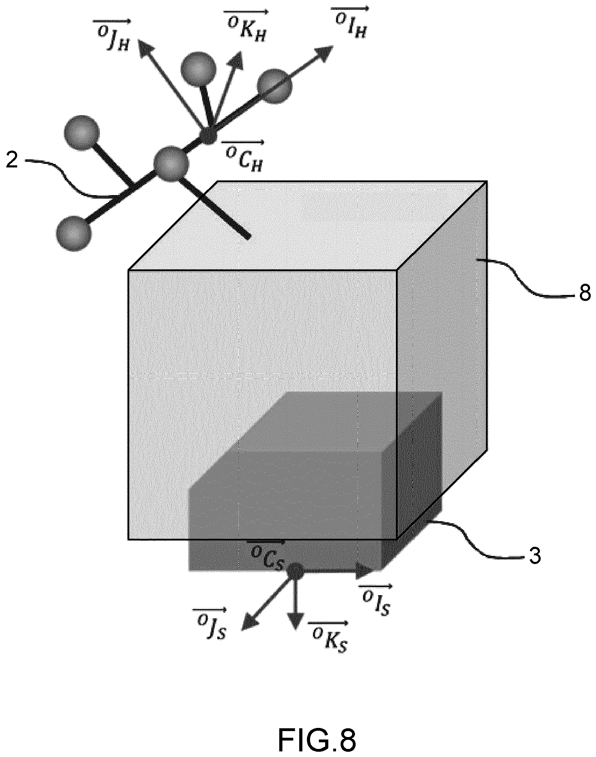

Le but des étapes 120 et 130 est de déterminer les dimensions du capteur (longueur et largeur), ainsi que la matrice de transformation entre le premier corps rigide situé sur le porte-capteur et le centre du capteur, comme indiqué sur la figure 8, qui représente schématiquement le capteur, porte-capteur et premier corps rigide du dispositif de calibration selon l'invention.

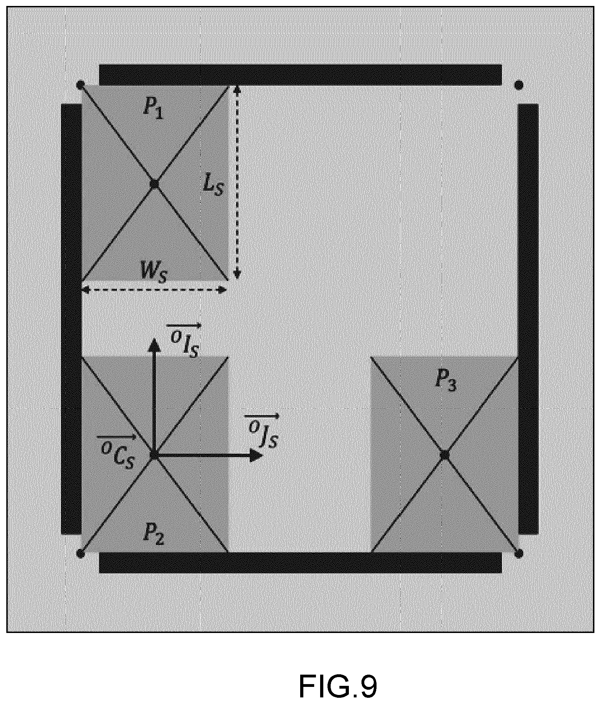

La figure 9 représente schématiquement la surface supérieure d'un bloc de calibration mis en œuvre dans le procédé de calibration selon l'invention pour déterminer la longueur et largeur du capteur.

Pour la réalisation des étapes 120 et 130, le capteur 3 est disposé (étape 115) sur la surface plane supérieure du bloc de calibration 14. L'opérateur acquiert trois positions du premier corps rigide présent sur le porte-capteur, comme visible sur la figure 9. Ces trois positions *P*₁, *P*₂ et *P*₃ correspondent respectivement aux coins supérieur-gauche, inférieur-gauche et inférieur-droit. A noter qu'il est possible de choisir une combinaison de coins différente de celle-ci.

Notons que le porte-capteur est conçu de telle manière à ce que ce soit le capteur lui-même et non le porte-capteur qui vienne au contact des bordures (bloqueurs) du bloc de calibration lorsque le porte-capteur est amené aux positions *P*₁, *P*₂ et *P*₃.

En plus des données précédemment disponibles, le calculateur 6 reçoit en entrée trois vecteurs :
- Vecteur définissant la première position dans le repère de référence *R_{O}* : *̅^̅{̅O̅}̅P̅*̅₁̅
- Vecteur définissant la deuxième position dans le repère de référence *R_{O}* : ^̅{̅O̅}̅*̅P̅*̅₂̅
- Vecteur définissant la troisième position dans le repère de référence *R_{O}* : *̅^̅{̅O̅}̅P̅*̅₃̅

Le calculateur 6 calcule les données suivantes :
- Longueur du capteur : *L_{S}*
- Largeur du capteur : *W_{S}*
- Matrice de transformation permettant de passer du repère porte-capteur *R_{H}* au repère capteur *R_{S}* : *^{H}T_{S}*

Les étapes de calcul sont détaillées ci-après.

Les vecteurs suivants sont calculés :
$\vec{P 21 O} = \vec{P 1 O} - \vec{P 2 O}$
$\vec{P 23 O} = \vec{P 3 O} - \vec{P 2 O}$

La longueur du capteur est calculée : ${L}_{S} = {L}_{B} - \left‖\vec{P 21 O}\right‖$

La largeur du capteur est calculée : ${W}_{S} = {W}_{B} - \left‖\vec{P 23 O}\right‖$

Enfin, les trois vecteurs unitaires du repère capteur R_{S} dans le repère de référence R_{O} sont calculés :
$\vec{I S O} = \vec{I B O}$
$\vec{J S O} = \vec{J B O}$
$\vec{K S O} = \vec{K B O}$

Il est alors possible de calculer la matrice de transformation permettant de passer du repère porte-capteur R_{H} au repère de référence R_{O}, le porte-capteur étant en P₃ :
$T H O = \left[\begin{matrix}\vec{I S O} & \vec{J S O} & \vec{K S O} & \vec{P 3 O} \\ 0 & 0 & 0 & 1\end{matrix}\right]$
$T O H = {\left(T H O\right)}^{- 1}$

En d'autres termes, le procédé de calibration selon l'invention comprend, préalablement à l'étape 125 de détermination du repère R_{S} lié au capteur dans le repère R_{H} lié au porte-capteur, une étape 123 de détermination d'une quatrième matrice de transformation permettant de passer du repère R_{H} lié au porte-capteur au repère de référence R₀.

L'étape suivante consiste à calculer les coordonnées du centre du capteur dans le repère de référence R_{O} (le calcul est fait pour le porte-capteur en P₃) : $\vec{C S O} = \vec{Q 3 O} - \left(\frac{{L}_{S} \times \vec{I S O}}{2}\right) - \left(\frac{{W}_{S} \times \vec{J S O}}{2}\right)$

Il convient aussi de calculer les trois vecteurs unitaires du repère capteur R_{S} dans le repère porte-capteur R_{H} :
$\vec{I S H} = T O H \times \vec{I S O}$
$\vec{J S H} = T O H \times \vec{J S O}$
$\vec{K S H} = \vec{I S H} ∧ \vec{J S H}$

Enfin, on calcule le centre du repère capteur R_{S} dans le repère porte-capteur R_{H} : $\vec{C S H} = T O H \times \vec{C S O}$

Autrement dit, le procédé de calibration comprend, préalablement à l'étape 130 de détermination de la deuxième matrice de transformation permettant de passer d'un repère R_{H} lié au porte-capteur à un repère R_{S} lié au capteur, une étape 125 de détermination du repère R_{S} lié au capteur dans le repère R_{H} lié au porte-capteur.

Pour finir, on peut calculer la matrice de transformation permettant de passer du repère porte-capteur R_{H} au repère capteur R_{S} : $T S H = \left[\begin{matrix}\vec{I S H} & \vec{J S H} & \vec{K S H} & \vec{C S H} \\ 0 & 0 & 0 & 1\end{matrix}\right]$

L'invention définit un dispositif mécanique composé d'un bloc de calibration (sous forme de plaque) destiné à être calibré par un système de positionnement optique (suivi de mouvement) et qui permet, en conjonction avec des calculs mathématiques, de calibrer un porte-capteur de manière simple, rapide et précise. La calibration du porte-capteur peut être effectuée directement en utilisant un outil permettant de relever les positions de différents points caractéristiques. L'utilisation du bloc de calibration calibré permet naturellement d'intégrer une contrainte de coplanarité qui augmente la précision de la calibration. C'est la combinaison de la calibration du bloc de calibration et du capteur qui confère un aspect particulièrement intéressant à ce procédé. Il en résulte une grande simplicité et rapidité de mise en œuvre ainsi qu'une amélioration significative de la précision de la calibration par rapport à une méthode classique.

L'invention porte également sur un procédé de visualisation en temps réel d'un signal de contrôle non destructif d'une pièce mécanique qui peut optionnellement être couplé au procédé de calibration.

Pour la mise en œuvre du procédé de visualisation, le dispositif 10 de contrôle peut comprendre un dispositif de visualisation en réalité augmentée 16 en vis-à-vis de la pièce mécanique 7, auquel un repère de réalité augmentée (R₀) est lié. C'est à travers ce dispositif de visualisation 16 que l'opérateur voit la pièce mécanique réelle, et c'est sur ce dispositif de visualisation 16 que s'affichent les représentations 3D holographiques (détaillées ultérieurement) superposées à la vue de la pièce mécanique sur le dispositif de visualisation 16.

Le calculateur 6 peut alors être configuré pour
a. déterminer une découpe de l'occlusion de la pièce mécanique 7, la découpe étant centrée autour du point d'émission ;
b. déterminer une surface de projection (ou visualisation) des signaux construite à partir des trajets ultrasonores des signaux ultrasonores délivrés par le capteur 3. Cette surface correspond à l'intersection du plan contenant l'axe d'émission dans l'occlusion.

Le terme occlusion signifie cacher des objets virtuels derrière des choses réelles. L'occlusion se produit lorsqu'un objet dans un espace 3D bloque la vue d'un autre objet. En réalité augmentée, les objets générés par ordinateur sont placés dans une scène réelle pour fournir des informations supplémentaires ou modifier la nature des objets réels. Ainsi, les objets virtuels et la scène réelle doivent être parfaitement alignés afin de maintenir des niveaux élevés de réalisme et permettre aux objets de se comporter comme ils le feraient dans des conditions normales.

Le calculateur 6 permet notamment d'assembler les signaux reçus par le capteur pour former une image de l'intérieur de la pièce.

Et le dispositif de visualisation 16 en réalité augmentée est configuré pour afficher :
a. une vue réelle de la pièce mécanique 7, du porte-capteur 8 et du capteur de contrôle non destructif 3,
b. une représentation holographique sous formes d'occlusions de la pièce mécanique 7', du porte-capteur 8' et du capteur de contrôle non destructif 3', superposées à la vue réelle,
c. une représentation holographique de la découpe de l'occlusion de la pièce et de la surface de visualisation des signaux, superposées à la vue réelle.

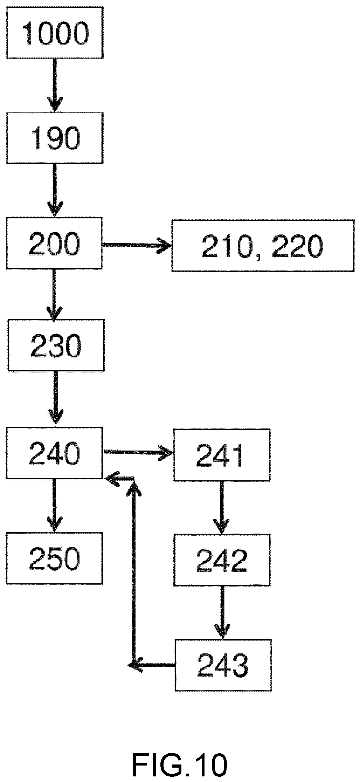

La figure 10 représente schématiquement un organigramme des étapes du procédé de visualisation en temps réel d'un signal de contrôle non destructif d'une pièce mécanique selon l'invention. Le signal est émis par le dispositif 10 de contrôle non destructif décrit précédemment. Selon l'invention, le procédé de visualisation comprend les étapes suivantes :
- Déplacement (étape 200) du capteur de contrôle non destructif 3 sur une zone d'examen de la pièce mécanique 7 ;
- Simultanément à l'étape 200 de déplacement du capteur de contrôle non destructif 3, émission (étape 210) à partir d'un point d'émission F selon un axe d'émission et réception (étape 220) du signal par le capteur 3 ;
- Détermination (étape 230) d'une découpe 80 d'une occlusion à l'intérieur de la pièce mécanique 7, la découpe 80 étant centrée autour du point d'émission F ;
- Détermination (étape 240) d'une surface 81 de visualisation de signaux construite à partir des trajets ultrasonores du signal, cette surface étant située à l'intérieur de la découpe 80 ;
- Visualisation (étape 250), sur le dispositif de visualisation en réalité augmentée 16,
   ∘ d'une vue réelle de la pièce mécanique 7, du porte-capteur 8 et du capteur de contrôle non destructif 3,
   ∘ d'une représentation 3D holographique de la pièce mécanique 7', du porte-capteur 8' et du capteur de contrôle non destructif 3', superposées à la vue réelle,
   ∘ d'une représentation holographique de la découpe 80 de l'occlusion de la pièce et de la surface 81 de visualisation des signaux, superposées à la vue réelle.

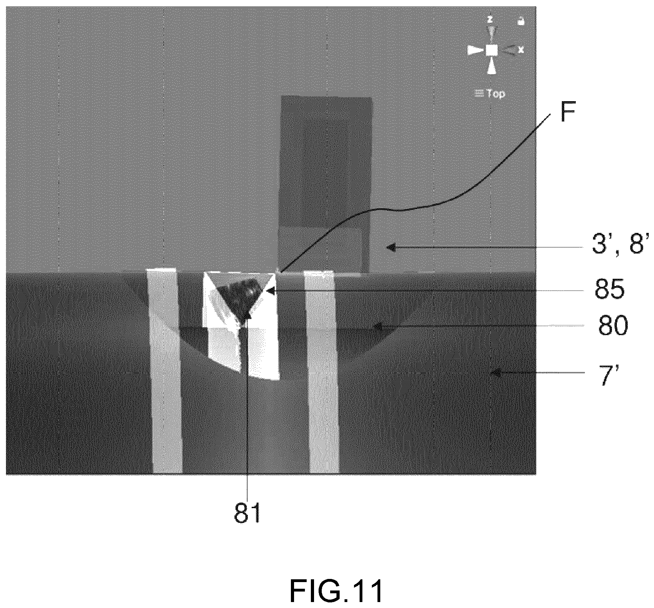

La figure 11 illustre l'affichage obtenu dans le dispositif de visualisation en réalité augmentée avec le procédé de visualisation selon l'invention. L'occlusion 80 correspond à une surface 3D de forme sensiblement semi-hémisphérique. Autrement dit, l'occlusion 80 est une représentation d'une portion d'un volume dans la pièce mécanique 7, autour du point F. La référence 85 représente une soudure dans la pièce mécanique 7.

Ainsi, le procédé de visualisation permet d'obtenir un affichage dans le dispositif de visualisation en réalité augmentée 16. L'opérateur y voit, à travers le dispositif de visualisation 16, la pièce mécanique 7, le porte-capteur 8 et le capteur 3. En plus de ces objets réels, l'affichage comprend une représentation 3D holographique 7' de la pièce mécanique, une représentation 3D holographique 8' du porte-capteur, et une représentation 3D holographique 3' du capteur. Ces trois représentations 3D holographiques sont superposées à l'affichage des objets réels. En plus des objets réels et de ces représentations 3D holographiques superposées aux objets réels, l'affichage comprend la représentation 3D holographique de l'occlusion 80 et la surface d'intersection 81, superposées aux représentations 3D holographiques superposées aux objets réels.

Dans la suite du document, nous ferons référence aux repères suivants :
- Repère du système de visualisation en réalité augmentée sous la dénomination repère RA : R_{RA}.
- Repère de la cible sous la dénomination repère QRCode : R_{QR}.

Le procédé de visualisation selon l'invention comprend au préalable une étape 190 de calibration du dispositif de visualisation en réalité augmentée 16 dans le repère de référence (R₀).

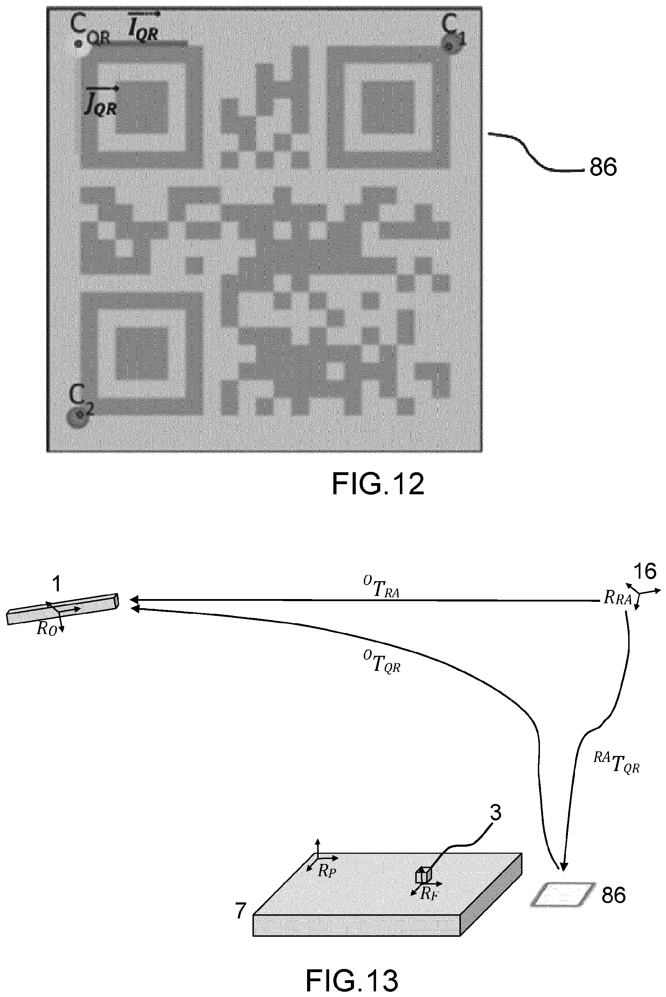

La figure 12 représente schématiquement le QR code mis en œuvre dans l'étape 190 de calibration du dispositif de visualisation en réalité augmentée dans le repère de référence du procédé de visualisation selon l'invention

Afin de définir la position des éléments connus dans le repère monde dans le repère du dispositif de visualisation en réalité augmentée, **il** faut calibrer le dispositif de visualisation en réalité augmentée. Le dispositif de visualisation en réalité augmentée établit une ancre, soit un repère à l'emplacement du QR code. Lors de la calibration, ce repère est positionné dans le repère monde, défini par le système de positionnement optique. La calibration permet d'établir la relation entre les deux mondes.

Dans le monde du dispositif de visualisation en réalité augmentée, le repère R_{QR} associé au QR Code 86 est défini comme le montre la figure 12. Pour calibrer ce repère R_{QR} dans le repère monde, les trois positions C_{QR}, C₁ et C₂ dans le repère monde sont acquises. Ensuite, le QR Code 86 est acquis par le dispositif de visualisation en réalité augmentée et une transformation interne ^{QR}T_{RA} est réalisée qui, combinée à la matrice ^{O}T_{QR}, permet le positionnement dans le repère RA de l'ensemble des éléments positionnés et traqués dans le repère monde. De manière similaire à ce qui a été détaillé précédemment pour l'étape de calibration 1000, nous avons ici les relations suivantes : $T QR O = \left[\begin{matrix}\vec{I QR O} & \vec{J QR O} & \vec{K QR O} & \vec{C QR O} \\ 0 & 0 & 0 & 1\end{matrix}\right]$

Le vecteur ^̅{̅O̅}̅I̅_̅{̅Q̅R̅}̅ dans le repère monde est : $\vec{I QR O} = \frac{\vec{{C}_{QR} {C}_{1}}}{\left‖\vec{{C}_{QR} {C}_{1}}\right‖}$

Le vecteur ^̅{̅O̅}̅J̅_̅{̅Q̅R̅}̅ dans le repère monde est : $\vec{J QR O} = \frac{\vec{{C}_{QR} {C}_{2}}}{\left‖\vec{{C}_{QR} {C}_{2}}\right‖}$

Le vecteur ^̅{̅O̅}̅K̅_̅{̅Q̅R̅}̅ dans le repère monde est : $\vec{K QR O} = \vec{I QR O} ∧ \vec{J QR O}$

La figure 13 représente schématiquement les matrices de transformation dans le procédé de visualisation selon l'invention.

L'étape de calibration 1000 définit et décrit la façon d'obtenir par calibration les matrices de transformation suivantes :
- la matrice de transformation permettant de passer du repère capteur *R_{F}* au repère monde *R_{O}* : *^{F}T_{O}.* Par inversion de cette matrice, on a aussi *^{O}T_{F}.*
- la matrice de transformation permettant de passer du repère pièce *R_{P}* au repère monde *R_{O}* : *^{P}T_{O}.* Par inversion de cette matrice, on a aussi *^{O}T_{P}.*
- la matrice de transformation permettant de passer du repère RA *R_{RA}* au repère monde *R_{O} : ^{RA}T_{O}.* Par inversion de cette matrice, on a aussi *^{O}T_{RA}.*

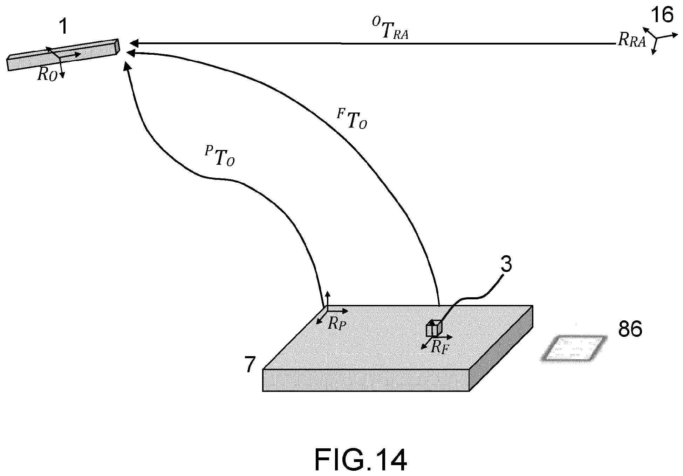

La figure 14 représente schématiquement ces matrices de transformation dans le procédé de visualisation selon l'invention.

Nous pouvons positionner l'origine F du capteur 3 dans le repère pièce *R_{P}* :
$P F P = P O P \left(P F O\right)$

Les informations *I* liées spatialement à ce point F telles que les trajets ultrasonores et le scan sectoriel reconstruit à partir de ceux-ci et des signaux physiques sont alors localisables dans le repère du dispositif de visualisation en réalité augmentée *R_{RA} :*
$P I RA = T O RA \left(P I O\right)$

Afin de clarifier les différents éléments de la scène 3D à visualiser, nous pouvons désigner par la suite comme « objet principal » l'objet 3D contenant les signaux à visualiser par l'opérateur et comme « objets secondaires » les objets 3D par rapport auxquels l'objet principal se positionne (notamment la pièce et le capteur). A noter que, s'agissant de réalité augmentée, chacun des objets décrits précédemment est visualisé sous forme d'hologramme et se superpose parfaitement à un objet réel, créant ainsi une occlusion de cet objet réel.

Comme déjà évoqué, l'objectif du procédé de l'invention est de permettre à l'utilisateur de visualiser l'objet principal constitué à partir de données ultrasonores (scan sectoriel par exemple) et de le positionner en 3D en réalité augmentée en donnant l'impression à l'utilisateur de le visualiser à l'intérieur de la pièce.

Pour que visuellement l'être humain interprète correctement le positionnement de cet objet principal dans l'espace visuel 3D, l'affichage de l'hologramme de cet objet principal ne suffit pas. L'hologramme donnera l'impression de flotter et sa relation spatiale avec le volume de la pièce sera perdue. Dans notre cas décrit ici, le volume en question est le volume traversé par les signaux ultrasonores ayant servi à construire cet objet principal.

L'invention consiste à afficher l'hologramme de cet objet principal accompagné d'un ensemble d'occlusions graphiques correspondant aux hologrammes des objets secondaires. Les objets secondaires sont la pièce et le capteur (accompagné de son porte-capteur) notamment. Pour que ces occlusions ne cachent pas totalement les objets réels, les occlusions ont avantageusement un niveau moyen de transparence. Les occlusions graphiques de la pièce (comprenant éventuellement une soudure à contrôler) et du capteur sont donc réalisées avec des textures et couleurs ayant un pourcentage de transparence.

Afin que le cerveau interprète l'objet principal comme faisant partie de l'intégrité interne de la pièce (et éventuellement de la soudure), il faut que cet objet principal apparaisse sur l'occlusion graphique de la pièce. Afin d'atteindre cet objectif, une ouverture en transparence des occlusions graphiques de la pièce est réalisée. Il s'agit de l'occlusion 80. Cette ouverture est centrée sur le capteur (plus précisément le point F du capteur, point par rapport auquel est localisé l'objet principal à afficher). Cette ouverture 80 est également un objet 3D et une partie de la surface de son volume est confondue avec la surface de l'objet principal.

Afin de ne pas gêner l'opérateur avec des informations situées hors de son champ de vue (par exemple l'arrière de la pièce), les données visibles, et donc la direction de l'ouverture, sont sélectionnées en fonction de la position et de l'orientation de l'œil de l'opérateur. Ainsi, si l'opérateur visualise les hologrammes depuis l'avant ou l'arrière de la pièce, les hologrammes restent bien orientés. Cela est rendu possible grâce à la calibration du dispositif de visualisation 16 par rapport au dispositif de suivi de mouvement 1.

L'étape 240 de détermination de la surface d'intersection 81 comprend les étapes suivantes :
- Calcul (étape 241) des trajets effectués par le signal émis par le capteur 3 ;
- Réalisation (étape 242) d'un maillage 3D représentatif de la pièce mécanique 7, du porte-capteur 8, du capteur de contrôle non destructif 3, et des trajets effectués par le signal ;
- Plaquage (étape 243) des trajets effectués par le signal sur le maillage 3D.

En d'autres termes, l'étape 240 permet la visualisation d'un scan sectoriel au sein du dispositif de visualisation en réalité augmentée 16. Il s'agit de la surface d'intersection 81 du plan contenant l'axe d'émission dans l'occlusion 80.

Grâce à l'invention, il est ainsi possible pour l'opérateur de visualiser les objets secondaires (c'est-à-dire objets réels : pièce mécanique 7 à contrôler, le porte-capteur 8 et le capteur 3), auxquels est superposé l'objet principal contenant les signaux à visualiser, c'est-à-dire l'ensemble formé par l'occlusion 80 et la surface 81.

Dans un mode particulier de réalisation, les étapes du procédé selon l'invention sont mises en œuvre par des instructions de programme d'ordinateur. En conséquence, l'invention vise aussi un programme d'ordinateur sur un support d'informations, ce programme étant susceptible d'être mis en œuvre dans un ordinateur, ce programme comportant des instructions adaptées à la mise en œuvre des étapes d'un procédé tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable. L'invention vise aussi un support d'informations lisible par un ordinateur, et comportant des instructions de programme d'ordinateur adaptées à la mise en œuvre des étapes d'un procédé tel que décrit ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé selon l'invention.

Il apparaîtra plus généralement à l'Homme du métier que diverses modifications peuvent être apportées aux modes de réalisation décrits ci-dessus, à la lumière de l'enseignement qui vient de lui être divulgué. Dans les revendications qui suivent, les termes utilisés ne doivent pas être interprétés comme limitant les revendications aux modes de réalisation exposés dans la présente description, mais doivent être interprétés pour y inclure tous les équivalents que les revendications visent à couvrir du fait de leur formulation et dont la prévision est à la portée de l'Homme du métier se basant sur ses connaissances générales.

## Revendications

1. Procédé de calibration d'un dispositif de contrôle non destructif d'une pièce mécanique (7), le dispositif comprenant :
- un système optique de suivi de mouvement (1) auquel un repère de référence (R₀) est lié,
- un porte-capteur (8),
- un premier corps rigide (2),
- un capteur de contrôle non destructif (3) solidaire du porte-capteur (8) relié de manière fixe au premier corps rigide (2),
- un calculateur (6),
le procédé étant **caractérisé en ce qu'**il comprend la réalisation des étapes suivantes par le calculateur (6) :
- Détermination (100), à partir de l'acquisition de la position de trois points sur une surface plane supérieure d'un bloc de calibration (14) par le système optique de suivi de mouvement (1), de la longueur et la largeur du bloc de calibration (14) ;
- détermination (110) d'une première matrice de transformation du repère de référence (R₀) vers un repère du bloc (R_{B}) lié au bloc de calibration (14) à partir de la longueur et la largeur du bloc de calibration (14) déterminées ;
- détermination (120), à partir de l'acquisition de la position de trois points sur le premier corps rigide (2) par le système optique de suivi de mouvement (1), de la longueur et la largeur du capteur (3) lorsque le capteur est disposé en trois positions distinctes (P₁,P₂,P₃) sur la surface plane supérieure du bloc de calibration (14);
- détermination (130) d'une deuxième matrice de transformation permettant de passer d'un repère (R_{H}) lié au porte-capteur à un repère (R_{S}) lié au capteur (8) à partir de la longueur et la largeur du capteur déterminées.

2. Procédé de calibration selon la revendication 1, comprenant en outre une étape (140) de détermination d'une troisième matrice de transformation permettant de passer du repère de référence (R₀) au repère (R_{S}) lié au capteur.

3. Procédé de calibration selon l'une quelconque des revendications 1 ou 2, comprenant, préalablement à l'étape (110) de détermination de la première matrice de transformation du repère de référence (R₀) vers un repère du bloc (R_{B}) lié au bloc de calibration, une étape (105) de détermination du repère du bloc (R_{S}) lié au bloc de calibration dans le repère de référence (R₀).

4. Procédé de calibration selon l'une quelconque des revendications 1 à 3, comprenant, préalablement à l'étape (130) de détermination de la deuxième matrice de transformation permettant de passer d'un repère (R_{H}) lié au porte-capteur à un repère (R_{S}) lié au capteur, une étape (125) de détermination du repère (R_{S}) lié au capteur dans le repère (R_{H}) lié au porte-capteur.

5. Procédé de calibration selon la revendication 4, comprenant, préalablement à l'étape (125) de détermination du repère (R_{S}) lié au capteur dans le repère (R_{H}) lié au porte-capteur, une étape (123) de détermination d'une quatrième matrice de transformation permettant de passer du repère (R_{H}) lié au porte-capteur au repère de référence (R₀).

6. Dispositif (10) de contrôle non destructif d'une pièce mécanique (7), comprenant :
- un système optique de suivi de mouvement (1) auquel un repère de référence (R₀) est lié,
- un porte-capteur (8),
- un premier corps rigide (2),
- un capteur de contrôle non destructif (3) solidaire du porte-capteur (8) relié de manière fixe au premier corps rigide (2),
- un calculateur (6),
le dispositif de contrôle non destructif étant **caractérisé en ce qu'**il comprend un bloc de calibration et **en ce que** le calculateur est configuré pour
- déterminer, à partir de l'acquisition de la position de trois points sur une surface plane supérieure du bloc de calibration (14) par le système optique de suivi de mouvement (1), la longueur et la largeur du bloc de calibration ;
- déterminer une première matrice de transformation du repère de référence (R₀) vers un repère du bloc (R_{B}) lié au bloc de calibration (14) à partir de la longueur et la largeur du bloc de calibration (14) déterminées ;
- déterminer, à partir de l'acquisition de la position de trois points sur le premier corps rigide (2) par le système optique de suivi de mouvement (1), la longueur et la largeur du capteur lorsque le capteur est disposé en trois positions distinctes (P₁,P₂,P₃) sur la surface plane supérieure du bloc de calibration (14);
- déterminer une deuxième matrice de transformation permettant de passer d'un repère (R_{H}) lié au porte-capteur à un repère (R_{S}) lié au capteur(8) à partir de la longueur et la largeur du capteur déterminées.

7. Dispositif de contrôle selon la revendication 6, dans lequel le calculateur est en outre configuré pour déterminer une troisième matrice de transformation permettant de passer du repère de référence (R₀) au repère (R_{S}) lié au capteur.

8. Dispositif de contrôle selon la revendication 6 ou 7, comprenant en outre un dispositif de pointage (4) comportant une pointe (42) et relié de manière fixe à un second corps rigide (41), le dispositif de pointage (4) étant apte à déterminer la position de points sur une surface.

9. Programme d'ordinateur comportant des instructions qui conduisent le calculateur du dispositif selon l'une des revendications 6 à 8 à exécuter les étapes du procédé selon l'une quelconque des revendications 1 à 5.

10. Support d'enregistrement lisible par un ordinateur sur lequel est enregistré le programme d'ordinateur selon la revendication 9.

11. Procédé de visualisation en temps réel d'un signal de contrôle non destructif d'une pièce mécanique (7), le signal étant émis par un dispositif de contrôle non destructif comprenant :
- un système optique de suivi de mouvement (1) auquel un repère de référence (R₀) est lié,
- un porte-capteur (8),
- un premier corps rigide (2),
- un capteur de contrôle non destructif (3) solidaire du porte-capteur (8) relié de manière fixe au premier corps rigide (2),
- un calculateur (6),
- un dispositif de visualisation en réalité augmentée (16) en vis-à-vis de la pièce mécanique (7), auquel un repère de réalité augmentée (R_{A}) est lié,
le procédé de visualisation comprenant les étapes du procédé de calibration selon l'une quelconque des revendications 1 à 5 et les étapes suivantes :
- Déplacement (200) du capteur de contrôle non destructif (3) sur une zone d'examen de la pièce mécanique (7) ;
- Simultanément à l'étape (200) de déplacement du capteur de contrôle non destructif (3), émission (210) à partir d'un point d'émission selon un axe d'émission et réception (220) du signal par le capteur ;
- Détermination (230) d'une occlusion (80) à l'intérieur de la pièce mécanique (7), l'occlusion (80) étant centrée autour du point d'émission ;
- Détermination (240) d'une surface d'intersection (81) d'un plan contenant l'axe d'émission dans l'occlusion (80) ;
- Visualisation (250), sur le dispositif de visualisation en réalité augmentée,
∘ d'une vue réelle de la pièce mécanique (7), du porte-capteur (8) et du capteur de contrôle non destructif (3),
∘ d'une représentation 3D holographique de la pièce mécanique (7'), du porte-capteur (8') et du capteur de contrôle non destructif (3'), superposées à la vue réelle,
∘ d'une représentation 3D holographique de l'occlusion (80) et de la surface d'intersection (81), superposées à la vue réelle.

## Patentansprüche

1. Verfahren zum Kalibrieren einer Vorrichtung zum zerstörungsfreien Prüfen eines mechanischen Teils (7), wobei die Vorrichtung Folgendes umfasst:
- ein optisches Bewegungsverfolgungssystem (1), mit dem ein Bezugskoordinatensystem (R₀) verknüpft ist,
- einen Sensorträger (8),
- einen ersten starren Körper (2),
- einen Sensor zur zerstörungsfreien Prüfung (3), der mit dem Sensorträger (8) einstückig ist, der fest mit dem ersten starren Körper (2) verbunden ist,
- einen Rechner (6),
wobei das Verfahren **dadurch gekennzeichnet ist, dass** es das Durchführen der folgenden Schritte durch den Rechner (6) umfasst:
- Bestimmen (100), anhand der Erfassung der Position von drei Punkten auf einer oberen ebenen Fläche eines Kalibrierungsblocks (14) durch das optische Bewegungsverfolgungssystem (1), der Länge und der Breite des Kalibrierungsblocks (14);
- Bestimmen (110) einer ersten Transformationsmatrix des Bezugskoordinatensystems (R₀) zu einem Koordinatensystem des Blocks (R_{B}), der mit dem Kalibrierungsblock (14) verknüpft ist, anhand der bestimmten Länge und Breite des Kalibrierungsblocks (14);
- Bestimmen (120), anhand der Erfassung der Position von drei Punkten auf dem ersten starren Körper (2) durch das optische Bewegungsverfolgungssystem (1), der Länge und der Breite des Sensors (3), wenn der Sensor in drei unterschiedlichen Positionen (P₁, P₂, P₃) auf der oberen ebenen Fläche des Kalibrierungsblocks (14) angeordnet ist;
- Bestimmen (130) einer zweiten Transformationsmatrix, die es ermöglicht, von einem mit dem Sensorträger verknüpften Koordinatensystem (R_{H}) zu einem mit dem Sensor (8) verknüpften Koordinatensystem (R_{S}) überzugehen, anhand der bestimmten Länge und Breite des Sensors.

2. Kalibrierungsverfahren nach Anspruch 1, ferner umfassend einen Schritt (140) zum Bestimmen einer dritten Transformationsmatrix, die es ermöglicht, vom Bezugskoordinatensystem (R₀) zum mit dem Sensor verknüpften Koordinatensystem (R_{S}) überzugehen.

3. Kalibrierungsverfahren nach einem der Ansprüche 1 oder 2, umfassend, vor dem Schritt (110) zum Bestimmen der ersten Transformationsmatrix des Bezugskoordinatensystems (R₀) zu einem Koordinatensystem des Blocks (R_{B}), der mit dem Kalibrierungsblock verknüpft ist, einen Schritt (105) zum Bestimmen des Koordinatensystems des Blocks (R_{B}), das mit dem Kalibrierungsblock verknüpft ist, in dem Bezugskoordinatensystem (R₀).

4. Kalibrierungsverfahren nach einem der Ansprüche 1 bis 3, umfassend, vor dem Schritt (130) zum Bestimmen der zweiten Transformationsmatrix, die es ermöglicht, von einem mit dem Sensorträger verknüpften Koordinatensystem (R_{H}) zu einem mit dem Sensor verknüpften Koordinatensystem (R_{S}) überzugehen, einen Schritt (125) zum Bestimmen des Koordinatensystems (R_{S}), das mit dem Sensor verknüpft ist, in dem mit dem Sensorträger verknüpften Koordinatensystem (R_{H}).

5. Kalibrierungsverfahren nach Anspruch 4, umfassend, vor dem Schritt (125) zum Bestimmen des Koordinatensystems (R_{S}), das mit dem Sensor verknüpft ist, in dem mit dem Sensorträger verknüpften Koordinatensystem (R_{H}), einen Schritt (123) zum Bestimmen einer vierten Transformationsmatrix, die es ermöglicht, vom Koordinatensystem (R_{H}), das mit dem Sensorträger verknüpft ist, zum Bezugskoordinatensystem (R₀) überzugehen.

6. Vorrichtung (10) zum zerstörungsfreien Prüfen eines mechanischen Teils (7), umfassend:
- ein optisches Bewegungsverfolgungssystem (1), mit dem ein Bezugskoordinatensystem (R₀) verknüpft ist,
- einen Sensorträger (8),
- einen ersten starren Körper (2),
- einen Sensor zur zerstörungsfreien Prüfung (3), der mit dem Sensorträger (8) einstückig ist, der fest mit dem ersten starren Körper (2) verbunden ist,
- einen Rechner (6),
wobei die Vorrichtung zum zerstörungsfreien Prüfen **dadurch gekennzeichnet ist, dass** sie einen Kalibrierungsblock umfasst und dadurch, dass der Rechner konfiguriert ist zum
- Bestimmen, anhand der Erfassung der Position von drei Punkten auf einer oberen ebenen Fläche des Kalibrierungsblocks (14) durch das optische Bewegungsverfolgungssystem (1), der Länge und der Breite des Kalibrierungsblocks;
- Bestimmen einer ersten Transformationsmatrix des Bezugskoordinatensystems (R₀) zu einem Koordinatensystem des Blocks (R_{B}), der mit dem Kalibrierungsblock (14) verknüpft ist, anhand der bestimmten Länge und Breite des Kalibrierungsblocks (14);
- Bestimmen, anhand der Erfassung der Position von drei Punkten auf dem ersten starren Körper (2) durch das optische Bewegungsverfolgungssystem (1), der Länge und der Breite des Sensors, wenn der Sensor in drei unterschiedlichen Positionen (P₁, P₂, P₃) auf der oberen ebenen Fläche des Kalibrierungsblocks (14) angeordnet ist;
- Bestimmen einer zweiten Transformationsmatrix, die es ermöglicht, von einem mit dem Sensorträger verknüpften Koordinatensystem (R_{H}) zu einem mit dem Sensor (8) verknüpften Koordinatensystem (R_{S}) überzugehen, anhand der bestimmten Länge und Breite des Sensors.

7. Prüfvorrichtung nach Anspruch 6, wobei der Rechner ferner dafür konfiguriert ist, eine dritte Transformationsmatrix zu bestimmen, die es ermöglicht, vom Bezugskoordinatensystem (R₀) zum mit dem Sensor verknüpften Koordinatensystem (R_{S}) überzugehen.

8. Prüfvorrichtung nach Anspruch 6 oder 7, ferner umfassend eine Zeigevorrichtung (4), aufweisend eine Spitze (42) und fest mit einem zweiten starren Körper (41) verbunden, wobei die Zeigevorrichtung (4) dazu geeignet ist, die Position von Punkten auf einer Oberfläche zu bestimmen.

9. Computerprogramm, aufweisend Anweisungen, die den Rechner der Vorrichtung nach einem der Ansprüche 6 bis 8 veranlassen, die Schritte des Verfahrens nach einem der Ansprüche 1 bis 5 auszuführen.

10. Speichermedium, das von einem Computer lesbar ist, auf dem das Computerprogramm nach Anspruch 9 gespeichert ist.

11. Verfahren zur Echtzeitanzeige eines Signals zur zerstörungsfreien Prüfung eines mechanischen Teils (7), wobei das Signal von einer Vorrichtung zur zerstörungsfreien Prüfung ausgesendet wird, umfassend:
- ein optisches Bewegungsverfolgungssystem (1), mit dem ein Bezugskoordinatensystem (R₀) verknüpft ist,
- einen Sensorträger (8),
- einen ersten starren Körper (2),
- einen Sensor zur zerstörungsfreien Prüfung (3), der mit dem Sensorträger (8) einstückig ist, der fest mit dem ersten starren Körper (2) verbunden ist,
- einen Rechner (6),
- eine Anzeigevorrichtung in erweiterter Realität (16) gegenüber dem mechanischen Teil (7), mit dem ein Koordinatensystem erweiterter Realität (R₀) verknüpft ist,
wobei das Anzeigeverfahren die Schritte des Kalibrierungsverfahrens nach einem der Ansprüche 1 bis 5 und die folgenden Schritte umfasst:
- Verschieben (200) des Sensors zur zerstörungsfreien Prüfung (3) in einem Prüfbereich des mechanischen Teils (7);
- gleichzeitig zum Schritt (200) zum Verschieben des Sensors zur zerstörungsfreien Prüfung (3), Aussenden (210) von einem Aussendepunkt entlang einer Aussendeachse und Empfangen (220) des Signals durch den Sensor;
- Bestimmen (230) eines Einschlusses (80) im Inneren des mechanischen Teils (7), wobei der Einschluss (80) um den Aussendepunkt herum zentriert ist;
- Bestimmen (240) einer Kreuzungsfläche (81) einer Ebene, die die Aussendeachse in dem Einschluss (80) enthält;
- Anzeigen (250), auf der Anzeigevorrichtung in erweiterter Realität,
o einer reellen Ansicht des mechanischen Teils (7), des Sensorträgers (8) und des Sensors zur zerstörungsfreien Prüfung (3),
∘ einer holographischen 3D-Darstellung des mechanischen Teils (7'), des Sensorträgers (8') und des Sensors zur zerstörungsfreien Prüfung (3'), die der reellen Ansicht überlagert werden,
o einer holographischen 3D-Darstellung des Einschlusses (80) und der Kreuzungsfläche (81), die der reellen Ansicht überlagert werden.

## Claims

1. A method for calibrating a device for the non-destructive testing of a mechanical part (7), the device comprising:
- an optical movement tracking system (1) to which a reference coordinate system (R₀) is linked,
- a sensor-holder (8),
- a first rigid body (2),
- a non-destructive testing sensor (3) integral with the sensor-holder (8) fixedly linked to the first rigid body (2),
- a computer (6),
the method being **characterised in that** it comprises the performance of the following steps by the computer (6):
- determining (100), from the acquisition of the position of three points on a top flat surface of a calibration block (14) by the optical movement tracking system (1), the length and the width of the calibration block (14);
- determining (110) a first transformation matrix of the reference coordinate system (R₀) to a coordinate system of the block (R_{B}) linked to the calibration block (14) from the determined length and width of the calibration block (14);
- determining (120), from the acquisition of the position of three points on the first rigid body (2) by the optical movement tracking system (1), the length and the width of the sensor (3) when the sensor is disposed in three distinct positions (P₁, P₂, P₃) on the top flat surface of the calibration block (14);
- determining (130), from the determined length and width of the sensor, a second transformation matrix making it possible to switch from a coordinate system (R_{H}) linked to the sensor-holder to a coordinate system (R_{S}) linked to the sensor (8).

2. The calibration method according to claim 1, further comprising a step (140) of determining a third transformation matrix making it possible to switch from the reference coordinate system (R₀) to the coordinate system (R_{S}) linked to the sensor.

3. The calibration method according to any one of claims 1 or 2, comprising, prior to the step (110) of determining the first transformation matrix of the reference coordinate system (R₀) to a coordinate system of the block (R_{B}) linked to the calibration block, a step (105) of determining the coordinate system of the block (R_{B}) linked to the calibration block in the reference coordinate system (Rₒ).

4. The calibration method according to any one of claims 1 to 3, comprising, prior to the step (130) of determining the second transformation matrix making it possible to switch from a coordinate system (R_{H}) linked to the sensor-holder to a coordinate system (R_{S}) linked to the sensor, a step (125) of determining the coordinate system (R_{S}) linked to the sensor in the coordinate system (R_{H}) linked to the sensor-holder.

5. The calibration method according to claim 4, comprising, prior to the step (125) of determining the coordinate system (R_{S}) linked to the sensor in the coordinate system (R_{H}) linked to the sensor-holder, a step (123) of determining a fourth transformation matrix making it possible to switch from the coordinate system (R_{H}) linked to the sensor-holder to the reference coordinate system (R₀).

6. A device (10) for the non-destructive testing of a mechanical part (7), comprising:
- an optical movement tracking system (1) to which a reference coordinate system (R₀) is linked,
- a sensor-holder (8),
- a first rigid body (2),
- a non-destructive testing sensor (3) integral with the sensor-holder (8) fixedly linked to the first rigid body (2),
- a computer (6),
the non-destructive testing device being **characterised in that** it comprises a calibration block and **in that** the computer is configured to:
- determine, from the acquisition of the position of three points on a top flat surface of the calibration block (14) by the optical movement tracking system (1), the length and the width of the calibration block;
- determine a first transformation matrix of the reference coordinate system (R₀) to a coordinate system of the block (R_{B}) linked to the calibration block (14) from the determined length and width of the calibration block (14);
- determine, from the acquisition of the position of three points on the first rigid body (2) by the optical movement tracking system (1), the length and the width of the sensor when the sensor is disposed in three distinct positions (P₁, P₂, P₃) on the top flat surface of the calibration block (14);
- determine a second transformation matrix making it possible to switch from a coordinate system (R_{H}) linked to the sensor-holder to a coordinate system (R_{S}) linked to the sensor (8) from the determined length and width of the sensor.

7. The testing device according to claim 6, wherein the computer is further configured to determine a third transformation matrix making it possible to switch from the reference coordinate system (R₀) to the coordinate system (R_{S}) linked to the sensor.

8. The testing device according to claim 6 or 7, further comprising a pointing device (4) containing a tip (42) and fixedly linked to a second rigid body (41), the pointing device (4) being capable of determining the position of points on a surface.

9. A computer program containing instructions which cause the computer of the device according to one of claims 6 to 8 to execute the steps of the method according to any one of claims 1 to 5.

10. **A computer-readable** storage medium on which the computer program according to claim 9 is stored.

11. A method for real-time visualisation of a signal of non-destructive testing of a mechanical part (7), the signal being emitted by a non-destructive testing device comprising:
- an optical movement tracking system (1) to which a reference coordinate system (R₀) is linked,
- a sensor-holder (8),
- a first rigid body (2),
- a non-destructive testing sensor (3) integral with the sensor-holder (8) fixedly linked to the first rigid body (2),
- a computer (6),
- an augmented reality visualisation device (16) facing the mechanical part (7), to which an augmented reality coordinate system (R_{A}) is linked,
the visualisation method comprising the steps of the calibration method according to one of claims 1 to 5 and the following steps:
- moving (200) the non-destructive testing sensor (3) over an examination zone of the mechanical part (7);
- simultaneously with the step (200) of moving the non-destructive testing sensor (3), transmitting (210) from a transmission point along an axis of transmission and receiving (220) the signal by the sensor;
- determining (230) an occlusion (80) inside the mechanical part (7), the occlusion (80) being centred around the transmission point;
- determining (240) an intersection surface (81) of a plane containing the emission axis in the occlusion (80);
- visualising (250), on the augmented reality visualisation device:
∘ a real view of the mechanical part (7), of the sensor-holder (8) and of the non-destructive testing sensor (3),
∘ a holographic 3D representation of the mechanical part (7'), of the sensor-holder (8') and of the non-destructive testing sensor (3'), which are superimposed on the real view,
∘ a holographic 3D representation of the occlusion (80) and of the intersection surface (81), which are superimposed on the real view.
